(19) Europäisches Patentamt
European Patent Office
Office européen des brevets

(11) **EP 4 380 798 B1**

(12) **EUROPEAN PATENT SPECIFICATION**

(45) Date of publication and mention
of the grant of the patent:
**15.10.2025 Bulletin 2025/42**

(21) Application number: **22758525.4**

(22) Date of filing: **01.08.2022**

(51) International Patent Classification (IPC):
**B32B 27/08** (2006.01)      **B32B 27/32** (2006.01)
**C08J 5/18** (2006.01)       **C08F 210/02** (2006.01)
**C08L 23/08** (2025.01)      **B29C 55/00** (2006.01)

(52) Cooperative Patent Classification (CPC):
(C-Sets available)
**B32B 27/08; B29C 55/04; B32B 27/32;
C08F 110/02; C08F 210/16; C08J 5/18;
C08L 23/06;** B32B 2250/03; B32B 2250/242;
B32B 2307/414; B32B 2307/516; B32B 2307/546;
B32B 2307/736; B32B 2439/46; B32B 2439/70;
(Cont.)

(86) International application number:
**PCT/EP2022/071592**

(87) International publication number:
**WO 2023/012125 (09.02.2023 Gazette 2023/06)**

(54) **POLYETHYLENE FILM**

POLYETHYLENFILM

FILM DE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2021 EP 21189369**

(43) Date of publication of application:
**12.06.2024 Bulletin 2024/24**

(73) Proprietor: **Ineos Europe AG
1180 Rolle (Vaud) (CH)**

(72) Inventors:
• **LIBOTTE, Annick
1400 Nivelles (BE)**
• **TRIFFAUX, Eleonore
1170 Bruxelles (BE)**

(74) Representative: **King, Alex
Mathisen & Macara LLP
Charta House
30-38 Church Street
Staines-upon-Thames, Middlesex TW18 4EP
(GB)**

(56) References cited:
**EP-A1- 2 855 577      EP-A1- 2 864 374
EP-B1- 2 855 577      EP-B1- 2 864 374**

(52) Cooperative Patent Classification (CPC): (Cont.)
C08J 2323/08; C08L 2203/16; C08L 2205/025

C-Sets
**C08F 110/02, C08F 2/001;**
**C08F 210/16, C08F 4/24;**

**C08F 210/16, C08F 4/6548;**
**C08F 210/16, C08F 4/6555;**
**C08L 23/06, C08L 23/0815;**
C08F 110/02, C08F 2500/07, C08F 2500/04,
C08F 2500/39, C08F 2500/26;
C08F 210/16, C08F 210/08

**Description**

The present invention relates to film of high density polyethylene which is oriented in the machine direction, to compositions suitable for the preparation thereof, and to a process for its preparation.

Polyethylene is available in numerous forms required of the various and distinct end uses for which it is destined. Polyethylene may be roughly divided into low density and high density grades. Within each grade, polyethylene may exhibit a variety of melt temperatures, melt flow ratios, melt viscosities, and the like. The physical properties of each type of polyethylene must be closely tailored to the specific end use; otherwise processing becomes problematic or even impossible. Thus, it is impossible, in general, to employ a polyethylene composition tailored for one type of processing in another type of processing. For example, low density polyethylene (LDPE) is widely used for preparation of films, and finds uses in such items as wrapping and plastic bags. LDPE is relatively easy to formulate for such uses, and may contain numerous ingredients in addition to LDPE itself, i. e., pigments, UV absorbers, thermal stabilizers, plasticizers, lubricants, etc.

It is known to stretch films in order to improve their properties such as strength and stiffness, and this stretching may be either monoaxial or biaxial. Machine direction orientation (MDO) is known to the polyolefin industry. When a polymer is strained under monoaxial stress, the orientation becomes aligned in the direction of pull. Most commercial MDO films are produced by orienting cast extrusion films. When an HDPE film undergoes MDO, the resultant film usually shows improved gloss, clarity, tensile strength, modulus and barrier properties. However, the oriented film often shows greatly reduced machine direction tear strength (MD tear) and dart impact strength. It often also has high shrinkage values, which can lead to warpage and other surface defects in the finished film or laminate.

Monoaxially oriented LDPE film is well known, as disclosed for example in WO 2019/074811, in which the LDPE has a density of 910-940 kg/m$^3$ and a melt index MI$_2$ of 1.8-10 g/10min. However strength and stiffness are limited by the relatively low density.

Monoaxially oriented high density polyethylene (HDPE) is also known. It has different properties to those of LDPE. The higher density and, in general, different physical properties of oriented HDPE also requires different processing conditions compared with LDPE. Oriented HDPE is generally extruded as a film, and then water quenched. Films may also be chill roll cast, or blown and air quenched. The film is then uniaxially stretched, optionally followed by annealing. The stretching operation takes place below the melt temperature.

WO 2017/099915 discloses MDO films made of HDPE with a density above 945 kg/m$^3$ which are intended for use as tapes, fibres or filaments. The single Example has a density of 950 kg/m$^3$ and a melt index of 1.5 g/10min and is stretched in the machine direction at ratios between 1:4 and 1:7.

EP 2 864 374 A1 describes films formed from multimodal polyethylene compositions. The compositions comprise ethylene polymer (A) and ethylene polymer (B). Polymer (A) preferably has a melt flow indices (MI$_2$) of 250-450 g/10min. The films are not oriented.

EP 2 855 577 A1 relates to ethylene polymer compositions and articles made therefrom, such as bottles formed by blow moulding. Films oriented an at least the machine direction are not disclosed.

Currently, film structures for packaging applications, such as stand up pouches, are often complex in view of the layer structures they require to provide the various functions required for packaging. Typically such film structures are made by laminating polyethylene films with another material to provide stiffness or barrier properties. Often this other material is polyethylene terephthalate (PET). However nowadays there is a trend to provide "100% PE" solutions, e.g. laminates consisting of polyethylene films only, in order to improve recyclability. Consequently there is an increasing need to provide polyethylene films which have equivalent properties to PET films, thereby enabling the replacement in a multilayer film of the PET layer by a polyethylene layer. One such commercial product is HTA 108 available from ExxonMobil, which is a polyethylene homopolymer film grade having a density of 961 kg/m$^3$ and a melt index MI$_2$ of 0.7 g/10min. It has stiffness measured by 1% secant modulus of 1200 MPa (MD) and 1700 MPa (TD). Such a film can be used in the production of laminates consisting of polyethylene films only.

It is an object of the invention to provide an polyethylene composition that can be stretched to high stretching ratios in the machine direction in order to obtain a film having high stiffness, good clarity and low shrinkage. Accordingly in a first aspect the present invention provides a film oriented in at least the machine direction comprising a polyethylene composition having the following properties:

a density of 955 - 965 kg/m$^3$;
a melt index MI$_2$ of 0.1 - 2 g/10min;
a G'(G"=3000) of 500-1700 Pa;
a Mz/ G'(G"=3000) at least 500 Da/Pa.

The film may be biaxially oriented (ie oriented in both machine and transverse directions), but it is preferably monoaxially oriented in the machine direction.

The polyethylene composition preferably comprises at least 95wt%, preferably at least 99wt% of the polymer components in the film, and more preferably is the only polymer component in the film.

We have found that a film made from the above polyethylene composition can be stretched to high stretching ratios, resulting in high stiffness and low shrinkage after stretching. This makes it suitable for use instead of PET in a multilayer film.

Preferably the film has a stretching ratio of at least 6 in the machine direction, meaning that it has been stretched to at least 6 times its length in that direction. Preferably the stretching ratio is at least 8. Stretching increases stiffness and strength, and the ability of the above polyethylene composition to be stretched to a ratio greater than 6 without breaking is partly responsible for its excellent properties. We have also found that the film has a relatively low level of shrinkage following heating. It is important to avoid shrinkage of a multilayer film following heat sealing, and low shrinkage is well known to be hard to achieve at high stretching ratios.

The polyethylene composition preferably has a density of 956 - 964 kg/m$^3$, more preferably 957 - 963 kg/m$^3$ and most preferably 958 - 962 kg/m$^3$.

The polyethylene composition preferably has a melt index $MI_2$ of 0.3 - 1.6 g/10min, more preferably 0.5 - 1.2 g/10min.

The polyethylene composition preferably has a melt storage modulus G'(G"=3000) of 700-1500 Pa, more preferably of 800-1400 Pa.

The polyethylene composition preferably has a Mz/ G'(G"=3000) of more than 550 Da/Pa, more preferably of more than 600 Da/Pa. Its Mz/ G'(G"=3000) is preferably no more than 1000 Da/Pa and more preferably no more than 800 Da/Pa.

The polyethylene composition preferably has a melt storage modulus G'(G"=500) of 60-200 Pa, more preferably 80-180 Pa.

The polyethylene composition preferably has a shear thinning index SHI($_{1,100}$) of 2-15, preferably of 3-13, more preferably 4-11.

The polyethylene composition preferably has a molecular weight distribution Mw/Mn of 2-20, more preferably 4-20 and most preferably 4-15.

The polyethylene composition preferably has a Mz/Mw of 3-9, preferably 3-7 and more preferably 4-7.

The polyethylene composition may be monomodal or multimodal, and is preferably monomodal. A multimodal polyethylene composition comprises at least two polyethylene components. A preferred multimodal composition is bimodal, which means that the composition contains significant amounts of only two polyethylene components. The form of the molecular weight distribution curve, i.e. the appearance of the graph of the polymer weight fraction as function of its molecular weight, of a multimodal polyethylene will show two or more maxima or at least be distinctly broadened in comparison with the curves for the individual fractions.

The preferred polyethylene composition used in the film of the invention may be produced by any of the methods known in the art and may involve conventional ethylene homopolymerisation or copolymerisation processes, e.g. gas phase, slurry phase, liquid phase polymerisations, Such processes typically use conventional reactors such as loop reactors, fluidised bed gas phase reactors, stirred tank reactors and the like.

In the case of a bimodal composition, the composition may be made by known processes such as mechanically blending the polymer components, or alternatively in situ formation of the polymer components in the presence of more than one catalyst, or alternatively the formation of the polymer components in a multistage polymerisation process. Blending may be carried out in any conventional blending apparatus. A multistage process is a polymerisation process in which a polymer comprising two or more fractions is produced by producing at least two polymer fraction(s) in separate reaction stages, usually with different reaction conditions in each stage, in the presence of the reaction product of the previous stage. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc.

When the composition is prepared with a single catalyst in a single reactor, or in more than reactor in series but under substantially the same process conditions, the composition is monomodal. The preferred polyethylene composition of the invention is monomodal.

The catalyst employed in the polymerisation process to produce the polyethylene compositions according to the invention may be any catalyst(s) suitable for preparing such polyethylenes. If the polyethylene is multimodal, it is preferred that the same catalyst produces both the high and low molecular weight fractions. For example, the catalyst may be a chromium oxide catalyst, a Ziegler-Natta catalyst, or a metallocene catalyst. Preferably the catalyst is a Ziegler-Natta catalyst.

In the case of a chromium catalyst, the catalyst comprises a granular or microspheroidal refractory oxide support and from 0.05 to 5%, more preferably from 0.1 to 3%, by weight of chromium.

Examples of chromium oxide catalysts according to the present invention are typically those comprising a refractory oxide support which is activated by a heat treatment advantageously carried out at a temperature of at least 250°C and at most equal to the temperature at which the granular support begins to sinter and under a non-reducing atmosphere and preferably an oxidising atmosphere. This catalyst can be obtained by many known processes, in particular those according to which, in a first stage, a chromium compound, such as a chromium oxide, generally of formula $CrO_3$, or a chromium compound which can be converted by calcination into chromium oxide, such as, for example, a chromium nitrate or sulphate, an ammonium chromate, a chromium carbonate, acetate or acetylacetonate, or a tert-butyl chromate, is combined with a granular support based on refractory oxide, such as, for example, silica, alumina, zirconium oxide, titanium oxide or a mixture of these oxides or aluminium or boron phosphates or mixtures in any proportion of these phosphates with the above mentioned oxides. In a second stage, the chromium compound thus combined with the granular support is subjected to a so-called activation operation by heat treatment in a non-reducing atmosphere and preferably an oxidising atmosphere at a temperature of at least 250°C and at most that at which the granular support begins to sinter. The temperature of the heat treatment is generally between 250°C and 1200°C and preferably between 350 and 1000°C.

The catalyst can contain, in addition to the chromium, from 0.1 to 10% of titanium in the form of titanium oxide and/or fluorine and/or aluminium, in particular in the form of aluminium oxide. A preferred catalyst is a titanium or aluminium modified supported chromium oxide based catalyst, most preferably a titanium modified supported chromium oxide based catalyst. For example, the catalyst can be modified with from 0.1 to 8 % by weight titanium or 0.1 to 6% by weight of aluminium.

The catalyst is supported on a granular or microspheroidal refractory oxide such as silica, alumina, zirconia oxide or a mixture or a coprecipitate of these oxides. The support can be obtained by various known processes, especially by precipitation of silicon compounds such as, for example, silica, from a solution of an alkali metal silicate, or alternatively by coprecipitation of a refractory oxide gel or hydrogel from solutions containing at least two compounds chosen from silicon, titanium, zirconium or aluminium compounds.

The granular support advantageously has a specific (BET) surface of between 200 and 1200 $m^2/g$, a pore volume ranging from 1 to 3.5 ml/g, and can consist of particles which have a diameter of between 20 and 250 $\mu$m, preferably between 30 and 150 $\mu$m. It advantageously contains hydroxyl functional groups and is preferably free from water at the time of its use during the preparation of the catalyst.

The catalyst is preferably prepared by a process comprising a first stage during which the support is impregnated with a chromium compound, and a second optional stage during which the product originating from the first stage is impregnated with either a titanium or an aluminium compound. The chromium compound employed can be a chromium oxide, generally of formula $CrO_3$, or a chromium compound which can be converted into chromium oxide by calcining, such as, for example, a chromium nitrate or sulfate, an ammonium chromate, a chromium carbonate, acetate or acetylacetonate or else a tertbutyl chromate.

Titanium compounds which can advantageously be employed are titanium alcoholate such as, for example, titanium tetra-isopropylate or titanium tetra-butylate. Aluminium compounds which can advantageously be employed are for example of the acetyl acetate, acetylacetonate, alkoxy, or alkyl types.

The impregnation of the support with the titanium or the aluminium compound can be performed advantageously just before or during the heat treatment procedure applied to the catalyst.

The catalyst can also be prepared by a process which consists of a coprecipitation of a gel or hydrogel such as that referred to above in the presence of a chromium compound and of a titanium compound, so that a cogel is formed comprising, on the one hand, at least one refractory oxide such as silica or alumina, and, on the other hand, a chromium compound and a titanium compound.

The catalyst can be introduced in the form of a coated catalyst or prepolymer containing, for example, from 10-5 to 3, preferably from 10-3 to 10-1, millimoles of chromium per gram of polymer. According to another embodiment of the present invention, the catalyst is directly injected into the gas phase polymerisation reactor.

Examples of catalysts can be found, for example, in EP 275675A, EP 453116A, US 3622521, EP 640625A, US 5473027 or WO 9912978.

In the case of a Ziegler-Natta catalyst, the catalyst used comprises at least one transition metal. Transition metal means a metal of groups 4, 5 or 6 of the Periodic Table of elements (CRC Handbook of Chemistry and Physics, 75th edition, 1994-95). The transition metal is preferably titanium and/or zirconium. A catalyst comprising not only the transition metal but also magnesium is preferably utilised. Good results have been obtained with catalysts comprising:

- from 5 to 30%, preferably from 6 to 23%, most preferably 8 to 16 % by weight of transition metal,
- from 0.5 to 20%, preferably from 2 to 18%, most preferably 5 to 15 % by weight of magnesium,
- from 20 to 70%, preferably from 30 to 65%, most preferably 40 to 60% by weight of halogen, such as chlorine,
- from 0.1 to 10%, preferably from 0.2 to 8%, most preferably 0.5 to 5 % by weight of aluminium;

the balance generally consisting of elements arising from products used for their manufacture, such as carbon, hydrogen and oxygen. These catalysts are preferably obtained by coprecipitation of at least one transition metal composition and a magnesium composition by means of a halogenated organoaluminium composition. Such catalysts are known, they have notably been described in patents US 3901863, US 42942200 and US 4617360. The catalyst is preferably introduced only into the first polymerisation reactor, i.e. there is no introduction of fresh catalyst into the further polymerisation reactor. The amount of catalyst introduced into the first reactor is generally adjusted so as to obtain an amount of at least 0.5 mg of transition metal per litre of diluent. The amount of catalyst usually does not exceed 100 mg of transition metal per litre of diluent.

Particularly preferred catalysts contain 5 to 30% by weight of transition metal, 0.5 to 20% by weight of magnesium, 20 to 70% by weight of chlorine and 0.1 to 10% by weight of aluminium, and have a residual organic radical content in the precipitated catalyst of less than 35wt%. These catalysts are also obtained by coprecipitation of at least one transition metal compound and a magnesium compound by means of a halogenated organoaluminium compound, but with a ratio of transition metal to magnesium of no more than about 1:1. They may optionally further comprise an electron donor. They are described in more detail in our own EP 703247B. Most preferred catalysts have the following composition:

Transition metal from 8 to 16 % by weight.
Magnesium content from 5 to 15 % by weight.
Chlorine content from 40 to 60 % by weight.
Aluminium content less than 5 % by weight.
Residual organic content less than 35 % by weight.
Total alkyl benzoate content less than 20 % by weight.

The cocatalyst utilised in the process is preferably an organoaluminium compound. Unhalogenated organoaluminium compounds of formula $A1R_3$ in which R represents an alkyl grouping having from 1 to 8 carbon atoms are preferred. Particularly preferred are triethylaluminium and triisobutylaluminium.

Metallocene catalysts may typically be represented by the general formula:

$(C_5R_n)_y Z_x (C_5R_m) M L_{(4-y-l)}$ where $(C_5R_n)_y$ and $(C_5R_m)$ are cyclopentadienyl ligands,

R is hydrogen, alkyl, aryl, alkenyl, etc.
M is a Group IVA metal
Z is a bridging group,
L is an anionic ligand, and y is 0,1 or 2,
n and m are from 1 to 5,
x is 0 or 1.

The most preferred complexes are those wherein y is 1 and L is halide or alkyl.

Typical examples of such complexes are bis (cyclopentadienyl) zirconium dichloride and bis (cyclopentadienyl zirconium dimethyl. In such metallocene complexes the cyclopentadienyl ligands may suitably be substituted by alkyl groups such as methyl, n-butyl or vinyl. Alternatively the R groups may be joined together to form a ring substituent, for example indenyl or fluorenyl. The cyclopentadienyl ligands may be the same or different. Typical examples of such complexes are bis (n-butylcyclopentadienyl) zirconium dichloride or bis (methylcyclopentadienyl) zirconium dichloride.

Examples of such complexes may be found in EP 129368A and EP 206794A.

Another type of metallocene complex is a constrained geometry complex in which the metal is in the highest oxidation state. Such complexes are disclosed in EP 416815A and WO 91/04257.

Following manufacture the polyethylene composition is compounded into pellets, which are then used to manufacture the film of the invention. Compounding conditions and equipment are well known to those skilled in the art.

The polyethylene composition may contain conventional additives in an amount of up to 5wt%, preferably up to 2wt% and more preferably up to 1wt% based on the total weight of the polyethylene composition. Such additives include stabilizers (antioxidizing agents), antiacid agents and antistatic agents.

Thus a further aspect of the present invention provides a film comprising a layer of the polyethylene composition defined above. The film may comprise only said layer, or it may be a multilayer film. In a preferred embodiment the remaining layers of the multilayer film also comprise polyethylene.

The polyethylene composition is extruded into film and generally quenched by conventional processing methods, i.e. by chill rolls, air quenching, water quenching, etc. Following film preparation, the film may optionally be slit, and is monoaxially oriented.

The orientation takes place at a temperature which is preferably above the line drawing temperature, and below the melt temperature. If necking can be tolerated, lower temperatures may be used.

The term "line drawing temperature" refers to the temperature above which uniform orientation is obtained, as is known in the art. The line drawing temperature and melting temperature can be determined experimentally. When the film is stretched at temperatures low enough for line drawing, a "line" or "neck" develops in the film, perpendicular to the direction of stretch once the yield point has been reached. Stretching then starts from this thinned-out region until an elongation equal to the natural stretch ratio of the film is achieved, for the particular stretch rate used. If a series of film samples is stretched under conditions of line-drawing at a set of increasingly higher temperatures, starting at room temperature, a series of decreasingly sharp maxima will result in the corresponding stress-strain curves. At some higher temperature, a maximum no longer appears in the stress-strain curve, and line drawing has ceased. At this temperature or higher temperatures, the film undergoes more uniform stretching over its length and no longer displays a line or neck during elongation.

The stretching may occur in conventional devices, such as between a series of pairs of counter-rotating rollers, the temperature of which may vary from roll to roll. For machine direction orientation, the initial pair of counter-rotating rollers revolve at a lower rate than the last pair, the "exit rollers", with pairs of rollers in between revolving at intermediate rates. Thus, the exit speed of the film is higher than the input speed and the film is stretched accordingly. The term "stretch ratio" is the ratio of a length of a sample of the film in the orientation direction, after stretching, compared to the original length of the film in the orientation direction, before stretching. The "stretch rate" is the rate of change in length of the stretched film over time. The stretch ratio may be adjusted to the desired level by increasing the relative differences in revolving rates of the input and exit rollers.

The optimum temperature for stretching will depend on the particular polyethylene or blend of polyethylenes selected. As indicated, when stretching the films, it is necessary for the film temperature to be below the melt temperature point and above the line drawing temperature. In practice, the actual sheet or film temperature is not usually measured. Instead, what is measured is, for example, the temperature of the fluid used to heat orienting rolls in a machine direction orienter, or the air temperature in an oven.

For example, the rollers may be contained within a stretch oven, which is preferably maintained at a temperature above the melt temperature of the polyethylene. Because of the speed of travel of the web through the oven, however, the film temperature never rises above the melt temperature, and thus the stretching takes place in the solid state. The orientation temperature may be up to just less than the melt temperature, generally about 130°C, more preferably in the range of 100°C to 130°C, and most preferably 115°C to 130°C.

Following exit from the optional annealing oven, the product may be wound onto rolls.

The film of the invention can be used to form articles including packaging, such as stand-up pouches. Being made only of polyethylene it has advantages in recyclability compared with multi-layer films which include layers of different polymers such as PET.

EXAMPLES

The meanings of the symbols used in these examples and the units expressing the properties mentioned and the methods for measuring these properties are explained below.

Melt indexes

Melt indexes are determined according to ISO1133 and are indicated in g/10min. For polyethylenes a temperature of 190°C is applied. $MI_2$ is determined under a load of 2.16 kg, $MI_5$ is determined under a load of 5 kg and HLMI is determined under a load of 21.6 kg.

Density

Density of the polyethylene was measured according to ISO 1183-1 (Method A) and the sample plaque was prepared according to ASTM D4703 (Condition C) where it was cooled under pressure at a cooling rate of 15°C/min from 190°C to 40°C.

Dynamic Rheological Analysis (for G'(G"=3000) and $SHI_{(1,100)}$)

Dynamic rheological measurements are carried out, according to ASTM D 4440, on a dynamic rheometer (e.g., ARES) with 25 mm diameter parallel plates in a dynamic mode under an inert atmosphere. For all experiments, the rheometer has been thermally stable at 190°C for at least 30 minutes before inserting the appropriately stabilised (with antioxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.

Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 rad/s. This is to ensure that the selected applied strain is well within the linear viscoelastic region of the polymer so that the oscillatory rheological measurements do not induce structural changes to the polymer during testing. In addition, a time sweep (TS) experiment is carried out with a low applied frequency of 0.1 rad/s at the selected strain (as determined by the SS experiments) to check the stability of the sample during testing.

The dynamic rheological data thus measured were then analysed using the rheometer software (viz., Rheometrics RHIOS V4.4 or Orchestrator Software) to determine the melt elastic modulus G'(G"=3000) at a reference melt viscous modulus (G") value of G"=3000 Pa. If necessary, the values were obtained by interpolation between the available data points using the Rheometrics software.

The term "Storage modulus", $G'(\square)$, also known as "elastic modulus", which is a function of the applied oscillating frequency, $\square$, is defined as the stress in phase with the strain in a sinusoidal deformation divided by the strain; while the term "Viscous modulus", $G''(\square)$, also known as "loss modulus", which is also a function of the applied oscillating frequency, $\square$, is defined as the stress 90 degrees out of phase with the strain divided by the strain. Both these moduli, and the others linear viscoelastic, dynamic rheological parameters, are well known within the skill in the art, for example, as discussed by G. Marin in "Oscillatory Rheometry", Chapter 10 of the book on Rheological Measurement, edited by A.A. Collyer and D.W. Clegg, Elsevier, 1988.

Shear Thinning Index SHI

Shear thinning index (SHI) is calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

The SHI value is obtained by calculating the complex viscosities $\eta_1$ and $\eta_{100}$ at a constant shear stress of 1 and 100 kPa respectively. The shear thinning index $SHI_{(1/100)}$ is defined as the ratio of the two viscosities $\eta_1$ and $\eta_{100}$.

Tensile properties

a) Secant modulus

Ssecant modulus (1%) is measured on oriented film according to the ISO 1184. The measurement is done in both machine (MD) and transverse (TD) direction.

b) Frank stiffness

The flexural modulus of the oriented film is measured with a Frank rigidimeter. The force applied to a 15mm wide band of the film sample at an angle of 5° over a length of 10mm is measured. The flexural modulus, or Frank stiffness in N/mm$^2$ or MPa, is calculated according to the following formula:

$$(60\ L^2 \times 12\ /\ 3.1416\ a.w\ ) \times (F/1000)\ /\ (e/1000)^3$$

where

-   L = length in flexion (mm)
-   w = film width (mm)
-   e = film thickness ($\mu$m)
-   a = banding angle (°)
-   F = banding force (mN)

The measurement is done in both machine (MD) and transverse (TD) directions.

Shrinkage

A 10x10 cm film sample is immersed for 10 seconds in an oil bath heated at 135°C. The dimension of the sample is measured after this heating in machine (MD) and transverse (TD) directions. The shrinkage is the ratio between the dimension after heating and the initial dimension of the sample, in percent.

Optical properties

The optical properties are measured on the oriented film according to the Standard methods:

Haze : ASTM D1003
Gloss : ASTM D2457 at 45°

Gel Permeation Chromatography Analysis for Molecular Weight Distribution determination

Apparent molecular weight distribution and associated averages, uncorrected for long chain branching, were determined by Gel Permeation (or Size Exclusion) Chromatography according to ISO16014-1, ISO 16014-2 and 16014-4, using a GPC-IR of Polymer Char with 3 columns PL Olexis (13 $\mu$m) Agilent of 30 cm length and a IR5 MCT detector.
The solvent used was 1,2,4 trichlorobenzene at 160°C, stabilised with BHT, of 0.4 g/litre concentration. Polymer solutions of 0.3 g/litre concentration were prepared at 160°C for two hours with stirring. The nominal injection volume was set at 200$\mu$l and the nominal flow rate was 1 ml/min.
A relative calibration was constructed using 16 narrow molecular weight linear polystyrene standards:

| PS Standard | Molecular Weight (Mp), Da |
| --- | --- |
| 1 | 12200000 |
| 2 | 5030000 |
| 3 | 3080000 |
| 4 | 1400000 |
| 5 | 526000 |
| 6 | 250000 |
| 7 | 127000 |
| 8 | 63000 |
| 9 | 34800 |
| 10 | 17600 |
| 11 | 12600 |
| 12 | 5490 |
| 13 | 3500 |
| 14 | 1820 |
| 15 | 672 |
| 16 | 266 |

The elution volume, V, was recorded for each PS standards. The PS molecular weight was then converted to PE equivalent using a Q factor: -0.36490.
The calibration curve Mw Pp = f(V) was then fitted with a 3 fit order equation. All the calculations are done with GPC One software from Polymer Char.

A) CATALYST

Catalyst A

Magnesium diethoxide was reacted with titanium tetrabutoxide for 7 hours at 140$\pm$5 °C in an amount such that the molar ratio of titanium to magnesium was equal to 1. The reaction product thus obtained (mixed alcoholate) was subsequently contacted with ethylbenzoate (EB) at ambient temperature for at least 6 hours and diluted in hexane to reach a concentration of 0.4 mol magnesium per litre, the addition being in an amount such that the molar ratio of ethyl benzoate to magnesium diethoxide was equal to 2. The mixture of mixed alcoholate and ethyl benzoate was then reacted with aluminium isobutyl dichloride (IBADIC), in two steps. Both steps were performed at 45°C. The amount of IBADIC introduced at the end of the first step corresponded to a IBADIC /Mg ratio of 4.5 mole/mole. A partial elimination of the chlorination by-products was effected by decantation of the solid and removal of the supernatant liquid. The amount of IBADIC introduced at the end of the second chlorination step corresponded to a IBADIC /Mg ratio of 2.5 mole/mole. After the second chlorination step, the slurry was aged at 60°C for 45 minutes, and subsequently cooled at ambient temperature (less than 35°C). The reaction by-products were then removed from the slurry by washing the solid with polymerisation grade hexane. The catalyst thus obtained, collected from the suspension, comprised (% by weight):
Ti: 13; Cl: 51; Al: 2; Mg: 7. The concentration of total benzoates in the catalyst was about 10wt%.

Catalyst B

In a 50 L stainless steel agitated autoclave, 6.7 moles of magnesium diethoxide were reacted with 13.4 moles of titanium tetrabutoxide for 4 hours at 150°C. The reaction product thus obtained was subsequently diluted by 19 L of hexane, and 37.2 moles of ethylaluminium dichloride (EADC) were added at 45°C. The addition was performed in 2 hours. Subsequently, the slurry reaction mixture was heated up to 60°C, then kept at this temperature for 45 min. The resulting brown solid was decanted and washed with several fractions of hexane so as to remove at least 75 % of the reaction by-products present in the supernatant solution. The solid thus collected from the suspension comprised (% by weight): Ti: 17; Cl: 38; Al: 2; Mg: 4.

Catalyst C

This catalyst is the chromium oxide catalyst EP30X, commercially available from PQ Corporation, which is a silica supported chromium oxide catalyst which was subjected to the activation procedure detailed below. The catalyst has the following characteristics:

Chromium content - 1.05 wt%
Surface Area - 323 $m^2$/g
Pore Volume - 1.66 ml/g
Typical D50 (Malvern) - ~105mm.

The EP30X catalyst was charged in a fluidized bed activator. The fluidisation started at ambient temperature under air with a fluidisation flow of 3.8 cm/s. Then the temperature was increased with a rate of 1.4 °C/min up to 845°C and the fluidisation flow was increased in parallel to reach 10.9 cm/s. The catalyst was maintained under those temperature and fluidisation conditions for 8 hours. Then the activator was cooled down with a rate of 1.8 °C/min under air up to 350 °C and then up to ambient temperature under nitrogen.

**B) COMPOSITION**

EXAMPLE 1

The manufacture of a composition comprising ethylene polymers was carried out in suspension in hexane in in a single loop reactor.
Hexane, ethylene, 1-butene, hydrogen, triethylauminium and Catalyst A were continuously introduced into the loop reactor. The polymerisation of ethylene was carried out in this mixture in order to form an ethylene/1-butene copolymer. The suspension comprising the copolymer was continuously withdrawn from the reactor and this suspension was subjected to a final reduction in pressure in the presence of steam, so as to evaporate the hexane and the reactants present (ethylene, 1-butene and hydrogen) and to recover the composition in the form of a powder, which was subjected to drying in order to complete the degassing of the hexane. The other polymerisation conditions are specified in Table 1.
The polymer powder was then transferred to a Werner and Pfleiderer ZSK40 twinscrew extruder and compounded with the following additive package: 500 ppm calcium stearate, 1200 ppm Irgafos 168, 600 ppm Irganox 1010.

EXAMPLE 2

The manufacture of a composition comprising ethylene polymers was carried out in suspension in hexane in two loop reactors connected in series and separated by a device which makes it possible continuously to carry out the reduction in pressure.

Hexane, ethylene, hydrogen, triethylaluminium and Catalyst B were continuously introduced into the first loop reactor and the polymerization of ethylene was carried out in this mixture in order to form the homopolymer (A). This mixture, including the homopolymer (A), was continuously withdrawn from the reactor and subjected to a reduction in pressure (~70°C, 0.1 MPa), so as to remove at least a portion of the hydrogen. The resulting mixture, at least partially degassed of hydrogen, was then continuously introduced into a second polymerization reactor, at the same time as ethylene, butene, hexane and hydrogen. Polymerization of the ethylene and 1-butene was carried out in the second reactor in order to form the ethylene/1-butene copolymer (B). The suspension comprising the polymer was continuously withdrawn from the second reactor and subjected to a final reduction in pressure in the presence of steam, so as to evaporate the hexane and the reactants present (ethylene, 1-butene and hydrogen) and to recover the composition in the form of a powder, which was subjected to drying in order to complete the degassing of the hexane.

The polymer powder was then transferred to a Werner and Pfleiderer ZSK40 monomodal profile screw PE08 and compounded with the following additive package: 500 ppm calcium stearate, 1200 ppm Irgafos 168, 600 ppm Irganox 1010.

EXAMPLE C3 (comparative)

The manufacture of a composition comprising ethylene polymers was carried out in suspension in isobutane in two loop reactors connected in series.

Isobutane, ethylene, 1-hexene and Catalyst C were continuously introduced into the loop reactor. The polymerisation of ethylene was carried out in this mixture in order to form an ethylene/1-hexene copolymer. This mixture, including the copolymer, was continuously withdrawn from the said reactor and was then continuously introduced into a second polymerization reactor, at the same time as ethylene, isobutane and 1-hexene. Polymerization of the ethylene and 1-hexene was carried out in the second reactor. The suspension comprising the polymer was continuously withdrawn from the reactor and subjected to a reduction in pressure, so as to evaporate the isobutane and the reactants present (ethylene and 1-hexene) and to recover the composition in the form of a powder, which was subjected to drying in order to complete the degassing of the isobutane. The other polymerisation conditions are specified in Table 1.

The polymer powder was then transferred to a Werner and Pfleiderer ZSK40 twinscrew extruder and compounded with the following additive package: 500 ppm calcium stearate, 1200 ppm Irgafos 168, 600 ppm Irganox 1010.

EXAMPLE C4 (comparative)

The same procedure as in Example 1 was followed except that Catalyst B was used.

The properties of all compositions are presented in Table 2.

TABLE 1

| Example | | 1 | 2 | C3 | C4 |
|---|---|---|---|---|---|
| Catalyst | | A | B | C | B |
| Reactor 1 | | | | | |
| $C_2$ conc | g/kg solvent | 13 | 10.5 | 30.7 | 10.5 |
| Al/Ti | mole/mole | 5 | 5 | -- | 1.5 |
| $H_2/C_2$ | mole/mole | 4.2 | 32 | -- | 1.8 |
| Comonomer/$C_2$ | mole/mole | 0 | 0 | 0.002 | 18 |
| Temperature | °C | 88 | 85 | 104.5 | 88 |
| Residence time | hours | 1.7 | 1.7 | 1.1 | 1.9 |
| Reactor 2 | | | | | |
| $C_2$ conc | g/kg solvent | -- | 13 | 30.7 | -- |
| Al/Ti | mole/mole | -- | 5 | -- | -- |
| $H_2/C_2$ | mole/mole | -- | 0.8 | -- | -- |
| Comonomer/$C_2$ | mole/mole | -- | 30 | 0.002 | -- |
| Temperature | °C | -- | 80 | 104.2 | -- |
| Residence time | hours | -- | 1.6 | 0.55 | -- |

TABLE 2

| Example | 1 | 2 | C3 | C4 |
|---|---|---|---|---|
| Density (kg/m$^3$) | 960 | 958 | 962 | 947 |
| MI$_2$ (g/10min) | 0.9 | 0.6 | 0.6 | 0.6 |
| Mn (kDa) | 16.1 | 7.8 | 15.9 | 31.6 |
| Mw (kDa) | 137.5 | 142.5 | 136.1 | 144.8 |
| Mz (kDa) | 652.4 | 805.6 | 1074.7 | 472.6 |
| Mw/Mn | 8.5 | 18.3 | 8.6 | 4.6 |
| Mz/Mw | 4.7 | 5.7 | 7.9 | 3.3 |
| G'(G"=500) (Pa) | 103 | 94 | 291 | 52 |
| G'(G"=3000) (Pa) | 939 | 1038 | 1965 | 560 |
| Mz/G'(G"=3000) (Da/Pa) | 695 | 776 | 547 | 844 |
| SHI$_{(1,100)}$ | 5.9 | 11.7 | 27.5 | 3.2 |

## C) FILM

The compositions of the above Examples were blown on a Windmöller & Hölscher 3-layer line of the following general description. Each layer of the 3-layer film contained the same composition.

- Three extruders of 50/60/50mm with barrier screws
- Gravimetric feeders for three materials per extruder
- Die diameter 200mm
- Chilled air capability
- Output up to 100-150kg/h
- Back to back 1200mm dual winder
- Max 1100mm film width

Films of 30 $\mu$m and 180 $\mu$m were produced with a Blow-Up Ratio (BUR) of 1:3, an extrusion temperature of 200-210°C and a layer A/B/C thickness ratio of 25/50/25 %

The 180 $\mu$m blown films prepared from Examples 1 and 2 and Comparative Examples C3 and C4 were stretched in the machine direction at various stretching ratios on a Hosokawa Alpine MDO pilot stretching line equipped with four heating and two stretching rolls operating at a temperature of 116-128°C, three annealing rolls operating at a temperature of 116-118°C and two cooling rolls operating at a temperature of 60 and 30°C.

The properties of the resulting stretched films together with the properties of the unstretched 30 $\mu$m blown film are shown in Table 3.

TABLE 3

| Example | | 1 | 2 | C3 | C4 |
|---|---|---|---|---|---|
| Unstretched blown film | | | | | |
| Film thickness | $\mu$m | 30 | 31 | 32 | 30 |
| Gloss | % | 31 | 6.1 | 9.4 | 25 |
| Haze | % | 28 | 67 | 73 | 26 |
| Secant modulus MD | MPa | 1115 | 867 | 1134 | 618 |
| Secant modulus TD | MPa | 1456 | 1112 | 1576 | 733 |
| Frank stiffness MD | MPa | 1114 | 1032 | 1184 | 837 |
| Frank stiffness TD | MPa | 1666 | 1446 | 1674 | 1005 |
| Stretch ratio MD = 5 | | | | | |
| Film thickness | $\mu$m | 32 | 38 | 37 | 33 |

(continued)

| Stretch ratio MD = 5 | | | | | |
|---|---|---|---|---|---|
| Gloss | % | 46 | 42 | 18 | 60 |
| Haze | % | 19 | 25 | 42 | 9.6 |
| Secant modulus MD | MPa | 3153 | 2076 | 2357 | 1428 |
| Secant modulus TD | MPa | 2200 | 2187 | 2131 | 1647 |
| Frank stiffness MD | MPa | 2576 | 1927 | 2355 | 1358 |
| Frank stiffness TD | MPa | 2419 | 1907 | 2206 | 1637 |
| Stretch ratio MD = 6 | | | | | |
| Film thickness | μm | 28 | 28 | 30 | 30 |
| Gloss | % | 60 | 50 | 23 | 70 |
| Haze | % | 9.9 | 16 | 33 | 6.9 |
| Secant modulus MD | MPa | 3151 | 2665 | 2761 | 1600 |
| Secant modulus TD | MPa | 2204 | 2428 | 2123 | 1602 |
| Frank stiffness MD | MPa | 3300 | 2146 | 2443 | 1489 |
| Frank stiffness TD | MPa | 2779 | 1993 | 2127 | 1579 |
| Shrinkage MD | % | 66.1 | 84.3 | 75.5 | 79.9 |
| Stretch ratio MD = 7 | | | | | |
| Film thickness | μm | 25 | 23 | * | 26 |
| Gloss | % | 79 | 60 | * | 77 |
| Haze | % | 6.6 | 10 | * | 4.6 |
| Secant modulus MD | MPa | 3204 | 2615 | * | 1951 |
| Secant modulus TD | MPa | 2060 | 2098 | * | 1619 |
| Frank stiffness MD | MPa | 3762 | 2193 | * | 1589 |
| Frank stiffness TD | MPa | 2390 | 1962 | * | 1616 |
| Shrinkage MD | % | 71.0 | 86.3 | * | 80.0 |
| Stretch ratio MD = 9 | | | | | |
| Film thickness | μm | 18 | 18 | * | * |
| Gloss | % | 82 | 64 | * | * |
| Haze | % | 4.3 | 8.1 | * | * |
| Secant modulus MD | MPa | 3903 | 3808 | * | * |
| Secant modulus TD | MPa | 2373 | 2198 | * | * |
| Frank stiffness MD | MPa | 4714 | 3062 | * | * |
| Frank stiffness TD | MPa | 3226 | 2494 | * | * |
| *Could not be stretched to this ratio | | | | | |

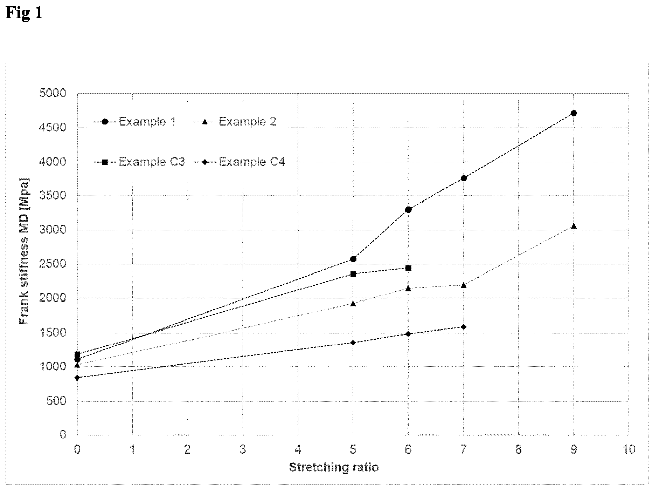

A comparison of the data provided in Tables 2 and 3 shows that compositions according to the invention can be stretched to higher stretching ratios while their stiffness continues to increase. Example 1 in particular is able to achieve very high stiffness in this way. This effect is shown in Figure 1. At the same time, the compositions according to the invention have desirable low haze, high gloss and low shrinkage values.

**Claims**

1. Film oriented in at least the machine direction comprising a polyethylene composition having the following properties:

    a density of 955 - 965 kg/m$^3$;
    a melt index MI$_2$ of 0.1 - 2 g/10min, determined according to ISO 1133 at a temperature of 190°C under a load of 2.16kg;
    a G'(G"=3000) of 500-1700 Pa, determined according to ASTM D-4440;
    a Mz/ G'(G"=3000) of at least 500 Da/Pa, wherein Mz is determined by gel permeation chromatography.

2. Film according to claim 1 which is monoaxially oriented in the machine direction.

3. Film according to claim 1 or 2, wherein the polyethylene composition comprises at least 95wt%, preferably at least 99wt% of the polymer components in the film, and more preferably is the only polymer component in the film.

4. Film according to any preceding claim which has a stretching ratio of at least 6 in the machine direction, preferably at least 8 in the machine direction.

5. Film according to any preceding claim, wherein the polyethylene composition has a density of 956 - 964 kg/m$^3$, preferably 957 - 963 kg/m$^3$.

6. Film according to any preceding claim, wherein the polyethylene composition has a melt index MI$_2$ of 0.3 - 1.6 g/10min, preferably 0.5 - 1.2 g/10min, determined according to ISO 1133 at a temperature of 190°C under a load of 2.16kg.

7. Film according to any preceding claim, wherein the polyethylene composition has a melt storage modulus G'(G"=3000) of 700-1500 Pa, preferably of 800-1400 Pa, determined according to ASTM D-4440.

8. Film according to any preceding claim, wherein the polyethylene composition has a Mz/ G'(G"=3000) no more than 1000 Da/Pa, wherein Mz is determined by gel permeation chromatography and G'(G"=3000) is determined according to ASTM D-4440.

9. Film according to any preceding claim, wherein the polyethylene composition has a melt storage modulus G'(G"=500) of 60-200 Pa, preferably of 80-180 Pa.

10. Film according to any preceding claim, wherein the polyethylene composition has a shear thinning index SHI$_{(1,100)}$, measured as explained in the description herein, of 2-15, preferably 3-13 and more preferably 4-11.

11. Multilayer film in which at least one layer is a film as defined in any preceding claim.

12. Multilayer film according to claim 11 in which all of the layers comprise polyethylene.

13. Article, preferably a stand-up pouch, comprising a multilayer film as defined in claim 11 or 12.

**Patentansprüche**

1. Folie, die mindestens in Maschinenrichtung ausgerichtet ist und eine Polyethylenzusammensetzung mit den folgenden Eigenschaften umfasst:

    eine Dichte von 955 - 965 kg/m$^3$;
    einen Schmelzindex MI$_2$ von 0,1 - 2 g/10 min, bestimmt gemäß ISO 1133 bei einer Temperatur von 190 °C unter einer Belastung von 2,16 kg;
    ein G' (G"=3000) von 500-1700 Pa, bestimmt gemäß ASTM D-4440;
    ein Mz/ G' (G"=3000) von mindestens 500 Da/Pa, wobei Mz durch Gelpermeationschromatographie bestimmt wird.

2. Folie nach Anspruch 1, die in Maschinenrichtung monoaxial orientiert ist.

**3.** Folie nach Anspruch 1 oder 2, wobei die Polyethylenzusammensetzung mindestens 95 Gew.-%, vorzugsweise mindestens 99 Gew.-% der Polymerkomponenten in der Folie umfasst und noch bevorzugter die einzige Polymerkomponente in der Folie ist.

**4.** Folie nach einem der vorhergehenden Ansprüche, die ein Streckverhältnis von mindestens 6 in Maschinenrichtung, vorzugsweise mindestens 8 in Maschinenrichtung, aufweist.

**5.** Folie nach einem der vorhergehenden Ansprüche, wobei die Polyethylenzusammensetzung eine Dichte von 956 - 964 kg/m$^3$, vorzugsweise 957 - 963 kg/m$^3$, aufweist.

**6.** Folie nach einem der vorhergehenden Ansprüche, wobei die Polyethylenzusammensetzung einen Schmelzindex $MI_2$ von 0,3 - 1,6 g/10 min, vorzugsweise 0,5 - 1,2 g/10 min, aufweist, bestimmt gemäß ISO 1133 bei einer Temperatur von 190 °C unter einer Belastung von 2,16 kg.

**7.** Folie nach einem der vorhergehenden Ansprüche, wobei die Polyethylenzusammensetzung einen Schmelzspeichermodul G' (G"=3000) von 700-1500 Pa, vorzugsweise von 800-1400 Pa, aufweist, bestimmt gemäß ASTM D-4440.

**8.** Folie nach einem der vorhergehenden Ansprüche, wobei die Polyethylenzusammensetzung ein Mz/ G' (G"=3000) von nicht mehr als 1000 Da/Pa aufweist, wobei Mz durch Gelpermeationschromatographie und G' (G"=3000) gemäß ASTM D-4440 bestimmt wird.

**9.** Folie nach einem der vorhergehenden Ansprüche, wobei die Polyethylenzusammensetzung einen Schmelzspeichermodul G' (G"=500) von 60-200 Pa, vorzugsweise von 80-180 Pa, aufweist.

**10.** Folie nach einem der vorhergehenden Ansprüche, wobei die Polyethylenzusammensetzung einen Scherverdünnungsindex SHI $(_{1,100})$ aufweist, gemessen wie in der vorliegenden Beschreibung erläutert, von 2-15, vorzugsweise 3-13 und noch bevorzugter 4-11.

**11.** Mehrschichtfolie, bei der mindestens eine Schicht eine Folie nach einem der vorhergehenden Ansprüche ist.

**12.** Mehrschichtfolie nach Anspruch 11, bei der alle Schichten Polyethylen umfassen.

**13.** Artikel, vorzugsweise ein Standbeutel, umfassend eine Mehrschichtfolie nach Anspruch 11 oder 12.

**Revendications**

**1.** Film orienté au moins dans le sens machine comprenant une composition de polyéthylène ayant les propriétés suivantes :

une masse volumique de 955 à 965 kg/m$^3$ ;
un indice de fluidité $MI_2$ de 0,1 à 2 g/10 min, déterminé selon la norme ISO 1133 à une température de 190 °C sous une charge de 2,16 kg ;
un G' (G"=3 000) de 500 à 1 700 Pa, déterminé selon la norme ASTM D-4440 ;
un Mz/G' (G"=3 000) d'au moins 500 Da/Pa, dans lequel Mz est déterminé par chromatographie par perméation de gel.

**2.** Film selon la revendication 1 qui est orienté monoaxialement dans le sens machine.

**3.** Film selon la revendication 1 ou 2, dans lequel la composition de polyéthylène comprend au moins 95 % en poids, de préférence au moins 99 % en poids des composants polymères dans le film, et est de manière davantage préférée le seul composant polymère dans le film.

**4.** Film selon une quelconque revendication précédente, qui a un rapport d'étirement d'au moins 6 dans le sens machine, de préférence d'au moins 8 dans le sens machine.

**5.** Film selon une quelconque revendication précédente, dans lequel la composition de polyéthylène a une masse volumique de 956 à 964 kg/m$^3$, de préférence de 957 à 963 kg/m$^3$.

6. Film selon une quelconque revendication précédente, dans lequel la composition de polyéthylène a un indice de fluidité MI$_2$ de 0,3 à 1,6 g/10 min, de préférence de 0,5 à 1,2 g/10 min, déterminé selon la norme ISO 1133 à une température de 190 °C sous une charge de 2,16 kg.

7. Film selon une quelconque revendication précédente, dans lequel la composition de polyéthylène a un module de stockage à l'état fondu G' (G"=3000) de 700 à 1500 Pa, de préférence de 800 à 1400 Pa, déterminé selon la norme ASTM D-4440.

8. Film selon une quelconque revendication précédente, dans lequel la composition de polyéthylène a un Mz/G' (G"=3000) ne dépassant pas 1000 Da/Pa, dans lequel Mz est déterminé par chromatographie par perméation de gel et G' (G"=3000) est déterminé selon la norme ASTM D-4440.

9. Film selon une quelconque revendication précédente, dans lequel la composition de polyéthylène a un module de stockage à l'état fondu G' (G"=500) de 60 à 200 Pa, de préférence de 80 à 180 Pa.

10. Film selon une quelconque revendication précédente, dans lequel la composition de polyéthylène a un indice de fluidification par cisaillement SHI$_{(1100)}$, mesuré comme expliqué dans la description ci-incluse, de 2 à 15, de préférence de 3 à 13 et de manière davantage préférée de 4 à 11.

11. Film multicouche dans lequel au moins une couche est un film tel que défini selon une quelconque revendication précédente.

12. Film multicouche selon la revendication 11 dans lequel toutes les couches comprennent du polyéthylène.

13. Article, de préférence un sachet debout, comprenant un film multicouche tel que défini dans la revendication 11 ou 12.

**Fig 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019074811 A
- WO 2017099915 A
- EP 2864374 A1
- EP 2855577 A1
- EP 275675 A
- EP 453116 A
- US 3622521 A
- EP 640625 A
- US 5473027 A

- WO 9912978 A
- US 3901863 A
- US 42942200 B
- US 4617360 A
- EP 703247 B
- EP 129368 A
- EP 206794 A
- EP 416815 A
- WO 9104257 A

**Non-patent literature cited in the description**

- CRC Handbook of Chemistry and Physics. 1994
- Oscillatory Rheometry. **G. MARIN** ; **A.A. COLLYER** ; **D.W. CLEGG**. Rheological Measurement. Elsevier, 1988
- Rheological characterization of polyethylene fractions. **HEINO, E.L.** ; **LEHTINEN, A.** ; **TANNER J.** ; **SEPPÄLÄ, J.** ; **NESTE OY** ; **PORVOO, FINLAND**. Theor. Appl. Rheol., Proc. Int. Congr. Rheol. 1992, vol. 1, 360-362

- **HEINO, E.L.** ; **BOREALIS POLYMERS OY** ; **PORVOO, FINLAND**. The influence of molecular structure on some rheological properties of polyethylene. *Annual Transactions of the Nordic Rheology Society*, 1995